(19) Europäisches Patentamt
European Patent Office
Office européen des brevets

(11) **EP 2 661 608 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(21) Anmeldenummer: **11805758.7**

(22) Anmeldetag: **24.11.2011**

(51) Int Cl.:
*G01F 1/58* (2006.01)        *G01F 15/04* (2006.01)
*G01F 15/075* (2006.01)       *G01F 3/22* (2006.01)

(86) Internationale Anmeldenummer:
**PCT/EP2011/005920**

(87) Internationale Veröffentlichungsnummer:
**WO 2012/092940 (12.07.2012 Gazette 2012/28)**

(54) **VERFAHREN UND VORRICHTUNG ZUR BESTIMMUNG DER IN EINEM VERBRAUCHSZEITINTERVALL DURCH EINEN DURCHFLUSSMENGENMESSER STRÖMENDEN MASSE EINES FLUIDS**

METHOD AND APPARATUS FOR DETERMINING THE MASS OF A FLUID FLOWING THROUGH A FLOW RATE METER IN A CONSUMPTION TIME INTERVAL

PROCÉDÉ ET DISPOSITIF DE DÉTERMINATION DE LA MASSE D'UN FLUIDE S'ÉCOULANT PENDANT UN INTERVALLE DE TEMPS DE CONSOMMATION À TRAVERS UN DÉBITMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.01.2011 DE 102011008010**
              **21.02.2011 DE 102011011871**

(43) Veröffentlichungstag der Anmeldung:
**13.11.2013 Patentblatt 2013/46**

(73) Patentinhaber: **AVAGO TECHNOLOGIES INTERNATIONAL SALES PTE. LIMITED**
**Singapur 768923 (SG)**

(72) Erfinder:
• **Mehnert, Walter**
  **85521 Ottobrunn (DE)**
• **Theil, Thomas**
  **82340 Feldafing (DE)**

(74) Vertreter: **Dilg, Haeusler, Schindelmann Patentanwaltsgesellschaft mbH Leonrodstraße 58 80636 München (DE)**

(56) Entgegenhaltungen:
EP-A2- 0 309 644        DE-A1-102007 039 050
US-A1- 2006 212 249     US-A1- 2009 164 162

**Beschreibung**

Die Erfindung betrifft ein Verfahren zur Bestimmung der Masse eines durch einen Durchflussmengenmesser strömenden Fluids, insbesondere Gases gemäß dem Oberbegriff von Anspruch 1 sowie eine zur Durchführung dieses Verfahrens geeignete Vorrichtung

Es sind Durchflussmengenmesser bekannt, die dazu dienen, die Menge eines Gases oder einer Flüssigkeit, oder allgemein eines Fluids zu erfassen, das durch sie hindurch von einem Lieferanten zu einem Abnehmer strömt, und einen Zählerstand zu bilden, der in gewissen Zeitabständen abgelesen wird, um die Masse des in dem der Ablesung vorausgehenden Zeitintervall durch den Durchflussmengenmesser geströmten Fluids zu ermitteln, da diese Masse mit der an den Verbraucher gelieferten, im Fluid gespeicherten Energie unter der Vorraussetzung eindeutig korreliert ist, dass sich die chemische und/oder physikalische Zusammensetzung der Fluids nicht ändert.

Die Druckschrift EP 0 309 644 A2 beschreibt eine Strömungsmesser, bei dem die mechanisch erfassten Volumenwerte eines Gasstroms mit Hilfe der Gasgesetze unter Berücksichtigung der Druck- und Temperaturparameter des Gases modifiziert werden.

In den folgenden Erläuterungen wird der Einfachheit halber hauptsächlich auf Gaszähler bzw. Gas-Durchflussmengenmesser Bezug genommen, doch sei ausdrücklich darauf hingewiesen, dass das erfindungsgemäße Verfahren in gleicher Weise auch für Flüssigkeits-Durchflussmengenmesser verwendet werden kann.

Viele der zurzeit üblichen Gas-Durchflussmengenmesser sind als Balgenzähler ausgebildet, d.h. durch Membranen voneinander getrennte Messkammern werden periodisch gefüllt und entleert. Ein Gelenkgetriebe überträgt die Membranbewegung auf eine Kurbelwelle, die zwei Schieber antreibt, die den Gasstrom steuern. Somit wird der Gasstrom wechselseitig durch einen Balg geleitet. Die Drehbewegung des Getriebes wird über eine magnetische Kupplung auf ein mechanisches Zählwerk übertragen, das im Allgemeinen nicht rücksetzbar ist, um Manipulationsversuche zu unterbinden. Die Messkammern geben ein Einheitsvolumen $V_E$ vor und der Zählerstand des Zählwerks wird jedes Mal um 1 erhöht, wenn ein Einheitsvolumen $V_E$ an den Abnehmer abgegeben worden ist.

Der Zählerstand wird in wählbaren Zeitabständen, beispielsweise jährlich abgelesen, und die an den betreffenden Abnehmer gelieferten Fluidmengen werden als Vielfaches des Einheitsvolumens $V_E$, beispielsweise in Litern oder Kubikmetern abgerechnet. Dabei wird angenommen, dass der Druck des durch den Durchflussmengenmesser strömenden Fluids zu allen Zeiten konstant ist, d.h. einen fest vorgegebenen Wert besitzt.

Hat das Fluid dann auch noch eine konstante Temperatur, die beispielsweise gleich der üblicher Weise verwendeten Referenztemperatur $T_0$ = 293 Kelvin (+20° C) ist, so führt das beschriebene Mess- und Abrechnungsverfahren zu völlig korrekten Ergebnissen, weil dann das Einheitsvolumen $V_E$ einer ihrem Wert nach exakt bekannten, immer gleichen Fluid-Einheitsmasse $M_0$, entspricht. Es genügt dann, zur Ermittelung der zwischen zwei Ablesungen des Zählerstandes durch den Durchflussmengenmesser geströmten Fluidmasse $M_{verbrauch}$, die eingetretene Zählerstandsänderung mit dem Einheitsvolumen $V_E$ zu multiplizieren, um einen Volumenwert zu erhalten, der ein exaktes Maß für die an den Abnehmer gelieferte Fluidmenge bzw. die in ihr gespeicherte Energie darstellt.

Im Regelfall sind jedoch weder die Temperatur noch der Druck des Fluids mit hinreichender Genauigkeit konstant. So kann sich erstere in einem definierten Bereich, beispielsweise von 253 Kelvin bis 333 Kelvin (-20° C bis +60° C) verändern, während in den Druck dann, wenn keine besonderen Maßnahmen ergriffen werden, der Atmosphärendruck eingeht, der sich nicht nur mit den Witterungsbedingungen ändert, sondern auch von der Meereshöhe des Ortes abhängt, an welchem der Durchflussmengenmesser zum Einsatz kommt.

Für die folgende Erläuterung wird zunächst angenommen, dass technische Maßnahmen gewährleisten, dass der Fluiddruck am Einsatzort des Durchflussmengenmessers gleich einem bekannten, konstanten Referenzdruck $P_0$ ist Es bleibt dann das Problem, dass bei der jeweils einen Zählschritt auslösenden Weitergabe des Einheitsvolumens $V_E$ an den Abnehmer eine sich mit der zum jeweiligen Messzeitpunkt herrschenden Temperatur $T_M$ stark ändernde Fluid-Masse $M_M$ geliefert wird, so dass eine einfache Multiplikation von Zählwert und Einheitsvolumen $V_E$ zu keinen brauchbaren Ergebnissen führt.

Anders gesagt: Ist die Temperatur $T_M$ des Fluids zum Messzeitpunkt niedriger als $T_0$, so besitzt das Fluid eine größere Dichte und es wird an den Abnehmer je Einheitsvolumen $V_E$ eine größere Fluidmasse als bei der Referenztemperatur $T_0$ geliefert; ist umgekehrt die Temperatur $T_M$ des Fluids zum Messzeitpunkt höher als $T_0$, so hat das Fluid eine geringere Dichte und der Abnehmer erhält je Einheitsvolumen $V_E$ eine kleinere Fluidmasse.

Um dennoch eine korrekte Ermittlung der gelieferten Fluidmenge vornehmen und diese in Volumeneinheiten ausdrücken zu können, ist es erforderlich, zumindest bei jeder Messwerterfassung die absolute Temperatur $T_M$ des Fluids zu messen und bei der Messwertbildung dadurch zu berücksichtigen, dass man mit Hilfe der allgemeinen Gasgleichung auf der Basis der im Einheitsvolumen $V_E$ bei der Temperatur $T_M$ enthaltenen Fluidmasse $M_M$ ein Liefervolumen $V_0$ berechnet, das diese Masse $M_M$ eingenommen hätte, wenn es beim Durchströmen des Durchflussmengenmessers die Referenztemperatur $T_0$ gehabt hätte.

Bei der Messtemperatur $T_M$ gilt gemäß der allgemeinen Gasgleichung

$$(1) \qquad p_M \, V_E \; = \; n_M \, R \, T_M$$

während bei Referenztemperatur $T_0$ gilt

$$(2) \qquad p_0 \, V_0 \; = \; n_0 \, R \, T_0$$

wobei $n_M R$ für die bei Messtemperatur $T_M$ im Einheitsvolumen $V_E$ enthaltene Fluidmasse und $n_0 R$ für die bei Referenztemperatur $T_0$ im Einheitsvolumen $V_E$ enthaltene Fluid-masse stehen.

Um das oben beschriebene, der Fluidmasse $n_M R$ entsprechende Liefervolumen $V_0$ zu erhalten, wird Gleichung (1) durch Gleichung (2) dividiert und gemäß Messprinzip $n_M R = n_0 R$ gesetzt und, weil der Druck p als konstant angenommen wird, gilt $p_M = P_0$ und es ergibt sich

$$(3) \qquad V_0 \, / \, V_E \; = \; T_0 \, / \, T_M$$

Gleichung (3) lässt sich nach dem interessierenden Liefervolumen $V_0$ auflösen:

$$(4) \qquad V_0 = \; V_E \, T_0 \, / \, T_M$$

Mit Hilfe eines Prozessors oder einer Rechenschaltung könnte also zu jedem Messzeitpunkt ohne weiteres aus der gemessenen Temperatur $T_M$ das der gerade durchgeflossene Fluidmasse $M_M$ entsprechende Liefervolumen $V_0$ als Vielfaches oder Teil von $V_E$ berechnet werden, da $T_0$ eine festgelegte Konstante ist.

Nun ist es nicht nur wünschenswert sondern aus Sicherheitsgründen oft unerlässlich, die Mess- und Speichervorgänge von Durchflussmengenmessern unabhängig von einer externen Stromversorgung bzw. Batterie durchzuführen, da erstere nicht jederzeit an jedem Messort manipulationssicher zur Verfügung steht und die Verwendung letzterer einen hohen Überprüfungsaufwand bedeutet und Funktionssicherheitsprobleme mit sich bringt.

Gemäß der Erfindung wird daher der für die Mess- und Speichervorgänge erforderliche Energiebedarf aus der Strömungsenergie des Fluids mit Hilfe eines autarken Positionsgebers gewonnen, der als Lineargeber oder Umdrehungszähler ausgebildet sein kann, wie die beispielsweise in der DE 10 2007 039 050 A1 beschrieben ist.

Zu diesem Zweck ist ein Erregermagnetsystem vorgesehen, das z.B. bei Balgenzählern sich entweder mit den Schiebern hin und her bewegt oder auf einem Rotor montiert ist, der über eine Kurbelwellenanordnung oder dergleichen durch den zu erfassenden Fluidstrom in Drehung versetzt wird. Entscheidend ist, dass eine exakte Korrelation zwischen dem durch den Durchflussmengenmesser bzw. dessen Messkammer(n) geströmten Fluid-Volumen und vom Erregermagnetsystem durchlaufenen Bewegungsabschnitten besteht.

Die folgenden Erläuterungen nehmen auf den bevorzugten Fall Bezug, dass das Erregermagnetsystem auf einem Rotor montiert und somit Teil eines Umdrehungszählers ist. Das erfindungsgemäße Verfahren ist aber hierauf nicht beschränkt und kann in völlig analoger Weise eingesetzt werden, wenn die Anzahl der gelieferten Fluid-Einheitsvolumen VE mit Hilfe einer Lineargeberanordnung erfolgt. Das Fluid-Einheitsvolumen $V_E$ ist von Gerät zu Gerät verschieden und muss in einem Eichvorgang bestimmt werden. Die daraus resultierende gerätespezifische Kalibrierkonstante is in dem jeweils verwendeten $V_E$ enthalten.

Immer dann, wenn der Rotor der Drehgebervariante ein vorgebbares Winkelsegment $\Delta_{\varphi M}$ durchlaufen hat, das beispielsweise einen Wert von 360° haben kann, findet eine Messwerterfassung statt. Der entsprechende Zeitpunkt wird hier als Messzeitpunkt bezeichnet. Es können jedoch für das Winkelsegment $\Delta_{\varphi M}$ auch beliebige andere Werte, insbesondere 180° oder 60° gewählt werden. In jedem Fall muss durch den Durchflussmengenmesser ein durch die die Größe der Messkammer(n) definiertes Fluid-Einheitsvolumen $V_E$ strömen, damit sich der Rotor um das Winkelsegment $A_{\varphi M}$ dreht.

Da im Feld des Erregermagnetsystems ein Wiegand- bzw. Impulsdraht mit einer auf den Draht gewickelter Spule so angeordnet ist, dass zumindest immer dann, wenn der Rotor des Durchflussmengenmessers das Winkelsegment $\Delta_{\varphi M}$ durchlaufen hat, also zu jedem Messzeitpunkt, in der Spule ein Mess-Spannungsimpuls erzeugt wird, kann wenigstens ein erster Energiespeicher einer Energiespeichereinheit aufgeladen werden, der eine zum Messen der Fluidtemperatur dienende Temperaturmesseinheit, einen nichtflüchtigen Speicher, in dem die Messwerte abgelegt bzw. gebildet werden, und zumindest einen Teil einer entsprechenden Steuer- und Verarbeitungselektronik wenigstens so lange mit Energie versorgt, bis der jeweils letzte Messwert sicher gespeichert ist.

Allerdings reicht die auf diese Weise aus der Strömungsenergie des Fluids abgezweigte elektrische Energie der einzelnen Spannungsimpulse zur Zeit nicht aus, um zu jedem Messzeitpunkt einen Prozessor zu betreiben, mit dessen Hilfe die in Gleichung (4) gezeigte, bei jeder Messwerterfassung erforderliche Division durch $T_M$ durchgeführt werden kann.

Gemäß einem ersten Aspekt der Erfindung wird daher die bei Verwendung eines Temperatursensors mit zur absoluten Temperatur $T_M$ direkt proportionaler Ausgangsspannung gemäß Gleichung (4) eigentlich erforderliche Division durch ein mathematisches Näherungsverfahren in eine Summenbildung ganzer Zahlen übergeführt, die ohne die Zuhilfenahme eines Prozessors mit einer Steuerlogik erfolgen kann, die nur einen geringen Energiebedarf besitzt und daher aus der Energie eines einzelnen Spannungsimpulses gespeist werden kann.

Ersetzt man in Gleichung (4) $T_M$ durch $T_0 \pm \Delta T$ so erhält man

$$(5) \qquad V_0 = V_E \frac{T_0}{T_0 \pm \Delta T} = V_E \frac{1}{1 \pm \dfrac{\Delta T}{T_0}}$$

Wenn $\Delta T$ klein im Vergleich zu $T_0$ ist, gilt näherungsweise

$$(6) \qquad V_0 \approx V_E \left(1 \mp \frac{\Delta T}{T_0}\right)$$

oder

$$(7) \qquad V_0 T_0 \approx V_E (2T_0 - T_M)$$

Da, wie bereits erwähnt, bei einem erfindungsgemäß arbeitenden Durchflussmengenmesser die Messtemperatur $T_M$ beispielsweise von 253 Kelvin bis 313 Kelvin variieren kann, gilt die Bedingung, dass $\Delta T$ im Vergleich zu $T_0$ klein sein soll, nicht in dem gesamten Temperaturbereich, und es ist erforderlich einen Korrekturkonstante $\rho \leq 1$ einzuführen;

$$(8) \qquad V_0 \frac{T_0}{V_E} \approx \left(1 + \frac{1}{\rho}\right)T_0 - \rho T_M$$

Für das relative, d.h. auf das Fluid-Einheitsvolumen $V_E$ bezogene Fluid-Liefervolumen $V_{verbraucht}$, das in einem Zeitraum, in dem r Messwerterfassungen stattgefunden haben, durch den Durchflussmengenmesser geflossen ist, gilt dann

$$(9) \qquad V_{Verbrauch} T_0 \approx r\left(1 + \frac{1}{\rho}\right)T_0 - \sum^{r} \rho T_M$$

Führt man zur Erzielung ganzzahliger Temperaturmesswerte eine die Auflösung der Temperaturmessung darstellende Konstante $\alpha$ ein, so lässt sich Gleichung (9) umformen in

$$(10) \qquad \alpha \frac{V_{Verbrauch} T_0}{\rho} \approx r\alpha\left(\frac{1+\rho}{\rho^2}\right)T_0 - \sum^{r} \alpha T_M$$

oder, da $T_0$, $\alpha$ und $\rho$ bekannte, konstante Größen sind, sodass $\alpha T_0/\rho$ als erste Konstante $K_1$ und $(1+\rho)T_0\alpha/\rho^2$ als zweite Konstante $K_2$ bezeichnet werden kann

$$(11) \qquad V_{Verbrauch} \, K_1 \approx r K_2 - \sum^r \alpha T_M$$

oder alternativ

$$(12) \qquad V_{Verbrauch} \, K_1 \approx \sum^r (K_2 - \alpha T_M).$$

In beiden Fällen muss zwar in jedem Messzeitpunkt mit Hilfe der zur Verfügung stehenden Energie eines einzelnen Impulses der um den Wiegand- oder Impulsdraht gewickelten Spule das Produkt $\alpha T_M$ gebildet werden, was aber mit Hilfe eines einen geringen Leistungsbedarf besitzenden Analog/Digitalwandlers mit dem Auflösungsvermögen $\alpha$ erfolgen kann, der dann, wenn man ihm das von einem linear arbeitenden Temperatursensor gelieferte Analogsignal zuführt, direkt dieses Produkt liefert.

$\alpha$ gibt an, wie weit die Einheit, z.B. Kelvin aufgelöst wird. Bei einer Auflösung von 0,1 Kelvin entspricht $\alpha = 10$.

Bei Verwendung der Gleichung (11) genügt es also, die jeweils zu den Messzeitpunkten anfallenden ganzzahligen Werte $\alpha T_M$ als fortlaufende Summe in einem nichtflüchtigen Speicher abzulegen und den Zählerstand eines nichtflüchtigen Zählers um 1 zu erhöhen, um die Anzahl r der in einem betrachteten Zeitintervall erfolgten Messwerterfassungen zu speichern.

Die fortlaufende Summe und der Zählerstand r des nichtflüchtigen Zählers können dann zu beliebig wählbaren Übertragungszeitpunkten an einen vorzugsweise mit Hilfe von Fremdenergie versorgten Prozessor weitergeleitet werden, der sie in das jeweilige Liefervolumen $V_{Verbrauch}$ umrechnet. Diese Weiterleitungs- oder Auslesevorgänge entsprechen den Eingangs geschilderten Ablesungen der bekannten mechanischen Zählwerke, und können ebenfalls in fest vorgegebenen Zeitabständen erfolgen. Da es aber zu ihrer Durchführung nicht erforderlich ist, dass sich eine Bedienungsperson zu dem betreffenden Durchflussmengenmesser begibt, sind auch wesentlich kürzere Abstände der Übertragungszeitpunkte möglich. Diese können entweder gemäß einem festgelegten Zeitraster vorgegeben werden und/oder durch eine Anforderung durch die Empfängerseite oder den Abnehmer ausgelöst werden.

Da ein erfindungsgemäßer Durchflussmengenmesser gegen Manipulationen von außen geschützt ist, ist es prinzipiell möglich, die fortlaufende Summe im nichtflüchtigen Speicher und den Zählerstand r des nichtflüchtigen Zählers nach jeder Weiterleitung an den Prozessor auf Null zurück zu setzen. Dies bietet den Vorteil, dass das jeweilige Liefervolumen $V_{verbrauch}$ unmittelbar die Fluidmenge bezeichnet, die seit dem vorausgehenden Übertragungszeitpunkt dem Abnehmer zugeflossen ist.

Eine Fortschreibung der seit Lieferbeginn an den Abnehmer abgegebenen Fluidmenge ist bei dem erfindungsgemäßen Verfahren als Normalfall dadurch möglich, dass die fortlaufende Summe und der Zählwert r entweder am Durchflussmengenmesser selbst oder beim Empfänger der übertragenen Daten nicht zurückgesetzt werden.

Das dem jeweiligen Übertragungszeitpunkt vorausgehende Zeitintervall, für das der Prozessor die durch den Durchflussmengenmesser geströmte Fluidmasse berechnet, ist also entweder das zwischen letztem und vorletztem Übertragungszeitpunkt oder das von Anfang an bis zum letzten Übertragungszeitpunkt verstrichene Zeitintervall.

Bei Verwendung der Gleichung (12) können ohne großen Fehler die Kommastellen von $K_2$ fallen gelassen werden, so dass die jeweils zu den Messzeitpunkten anfallenden Werte $K_2 - \alpha T_M$ ganzzahlig sind und in dem nichtflüchtigen Speicher als fortlaufende Summe abgelegt werden können. Die Differenzbildung kann mit einem einen geringen Leistungsbedarf besitzenden Rechenwerk durchgeführt werden. Eine Erfassung und Speicherung des Zählwertes r ist hier nicht erforderlich. Die endgültige Berechnung des Liefervolumens $V_{Verbrauch}$ erfolgt wiederum am Ende des betrachteten Zeitintervalls nach Auslesen allein der fortlaufende Summe, die mit Hilfe eines mit Fremdenergie versorgten Prozessors durch $K_1$ dividiert wird.

in den Gleichungen (8) bis (12) kann jeweils das "$\approx$"-Zeichen durch das "="-Zeichen ersetzt werden, wenn Genauigkeiten $\geq 0,5$ % zulässig sind.

Eine andere Möglichkeit, die im nichtflüchtigen Speicher als fortlaufende Summe abzulegenden Werte zu erzeugen, besteht darin, einen nicht linearen Temperatursensor zu verwenden, der eine zur Temperatur $T_M$ umgekehrt proportionale Ausgangsspannung $U_M$ liefert, wie dies beispielsweise mit Hilfe eines mit zusätzlichen Widerständen entsprechend beschalteten NTC möglich ist:

Aus Gleichung (4) wird dann

$$(13) \qquad V_0 = V_E \, T_0 \, U_{TM}$$

oder, wenn man mit $U_{Mmin}$ den bei der tiefsten zu messenden Temperatur auftretenden Spannungswert bezeichnet und die aktuell gemessene Temperatur $T_M$ durch $U_{Mmin} + \Delta U_{TM}$ darstellt

$$(14) \qquad \frac{V_0}{V_E T_0} = U_{TM} = U_{min} + \Delta U_{TM}$$

Die Ermittlung des Liefervolumens $V_{Verbrauch}$ erfolgt dann nach Gleichung

$$(15) \qquad K_4\, V_{Verbrauch} = r\alpha U_{min} + \sum^{r} \alpha \Delta U_{TM}$$

(mit Zählung der Messwerterfassungen je betrachtetem Zeitintervall und Speicherung und Übertragung des betreffenden Zählerstandes r )oder nach Gleichung

$$(16) \qquad K_4\, V_{Verbrauch} = \sum^{r} (\alpha U_{min} + \alpha \Delta U_{TM}) = \sum^{r} \alpha U_{tm}$$

(ohne Zählung der Messwerterfassungen je betrachtetem Zeitintervall und ohne Erzeugung, Speicherung und Übertragung eines entsprechenden Zählerstandes r).

Wenn der oder die erfassten und gespeicherten Werte an einen mit Fremdenergie versorgten Prozessor übertragen worden sind, kann dieser im Fall der Gleichung (15) aus der fortlaufend gespeicherten Summe $\sum^{r} \alpha \Delta U_{TM}$ durch Addition von $r\alpha U_{Mmin}$ und Division durch $K_4$, das interessierende Liefervolumen $V_{Verbrauch}$ ermitteln, wobei $K_4 = \alpha/V_E T_0$ ist. Bei Verwendung der Gleichung (16) wird nur die fortlaufende Summe $\sum^{r} \alpha U_{TM}$ an den Prozessor übermittelt und von diesem durch $K_4$ dividiert. Auch hier ist $\alpha$ ein den Messwert letztendlich nicht beeinflussender Faktor, der lediglich dazu dient, aus den unter Umständen als Vielfache von Grad-Bruchteilen anfallenden Messwerten $\Delta U_M$ ganze Zahlen zu erzeugen. Werden die Messwerten $\Delta U_M$ nur in ganzen Celsius-Gradwerten erhalten, so ist $\alpha=1$, sind es Zehntel-Gradwerte ist $\alpha= 10$, usw.

Ist keine Einrichtung zum Konstanthalten des Fluiddrucks vorgesehen, so wird dieser erfindungsgemäß gemessen. Wenn $U_{pM}$ die von dem verwendeten Drucksensor abgegebene Spannung ist, so erhält man analog zu Gleichung (13)

$$(17) \qquad \frac{V_0 p_0}{V_E T_0} = U_{TM} U_{pM}$$

Führt man auch hier zwei der Mess-Auflösung entsprechende Faktoren $\alpha$ und $\beta$ ein, die aus den Spannungswerten $U_{TM}$ und $U_{pM}$ ganzzahlige Werte $\alpha\, U_{TM}$ bzw. $\beta U_{pM}$ erzeugen, so erhält man analog zu Gleichung (16)

$$(18) \qquad K_5 V_{Verbrauch} = \sum^{r} \alpha\beta U_{TM} U_{pM}$$

wobei $K_5 = \alpha\beta p_0/V_E T_0$ bedeutet. Es genügt also, mit der je Messimpuls im ersten Energiespeicher zur Verfügung stehenden Energie die Produkte $\alpha U_{TM}\beta U_{pM}$, zu bilden und als fortlaufende Summe $\sum^{r} \alpha\beta U_{TM} U_{pM}$ im nichtflüchtigen Speicher abzulegen, aus dem sie an den mit Fremdenergie versorgten Prozessor übertragen werden kann, der sie durch K5 dividiert, um das interessierende sowohl in Bezug auf Temperatur- als auch Druckänderungen korrigierte Liefervolumen $V_{Verbrauch}$ zu erhalten, das ein genaues Maß für die an den Abnehmer gelieferte Fluidmasse darstellt.

Bei vielen Durchflussmengenmessern ist die mechanische Anordnung so getroffen, dass sich der Rotor nur in einer Richtung drehen kann. Bei Anwendungsfällen, in denen eine Rotordrehung in beiden Richtungen möglich ist, ist ein magnetosensitives Element, vorzugsweise ein Hallelement zusätzlich im Feld des Erregermagnetsystem angeordnet, dessen Ausgangssignal zur Drehrichtungserkennung dient, wie dies beispielsweise in der DE 10 2008 051 479. A1 beschrieben ist und das auch vom ersten Energiespeicher mit elektrischer Energie versorgt wird.

Mit Hilfe einer mit Fremdenergie versorgbaren Hallelementanordnung, die gleichfalls im Feld des Erregermagnetsystems angeordnet ist, kann das Winkelsegment $\Delta\varphi_M$ fein aufgelöst werden, wie dies beispielsweise aus der bereits erwähnten DE 10 2007 039 050 A1 bekannt ist. Diese Feinauflösung kann zu Eichzwecken und/oder zur Erkennung von Lecks auf der Abnehmerseite verwendet werden.

Das Erregermagnetsystem kann mehrere Permanentmagnete umfassen, sodass die auf den Wiegand- bzw. Impulsdraht gewickelte Spule zwischen den Mess-Spannungsimpulsen weitere Spannungsimpulse abgibt, die einen weiteren Energiespeicher als autarke Energiequelle der Energiespeichereinheit laden, in dem Energie aus mehreren dieser weiteren Spannungsimpulsen kumuliert wird, die ausreicht, um von Zeit zu Zeit den Wert der im nichtflüchtigen Speicher abgelegten fortlaufenden Summe an einen entfernt angeordneten Empfänger zu senden, bei dem sich dann der mit externer Energie versorgte Prozessor befindet, der die Berechnung des Liefervolumens $V_{Verbrauch}$ durchführt. Auch ist es möglich, dass der weitere Energiespeicher der Energiespeichereinheit sogar diesen oder einen beim Durchflussmengenmesser befindlichen, diese Berechnungen durchführenden Prozessor mit Energie versorgt.

Vorzugsweise umfasst das Erregermagnetsystem zwei Permanentmagnete mit einem abschirmenden Rückschlusskörper, wie in der DE 10 2007 039 050 A1 beschrieben. Durch diese Abschirmung kann der Durchflussmengenmesser wirkungsvoll gegen Manipulationsversuche geschützt werden, die mit Hilfe von außen angelegten Magnetfeldern erfolgen, um z.B. die Bewegung des Erregermagnetsystems abzubremsen oder zu hemmen.

Als nicht flüchtiger Speicher findet vorzugsweise ein FRAM- oder ein MRAM-Speicher Verwendung.

Diese und weitere vorteilhafte Ausgestaltungen des erfindungsgemäßen Verfahrens sind in den Unteransprüchen niedergelegt.

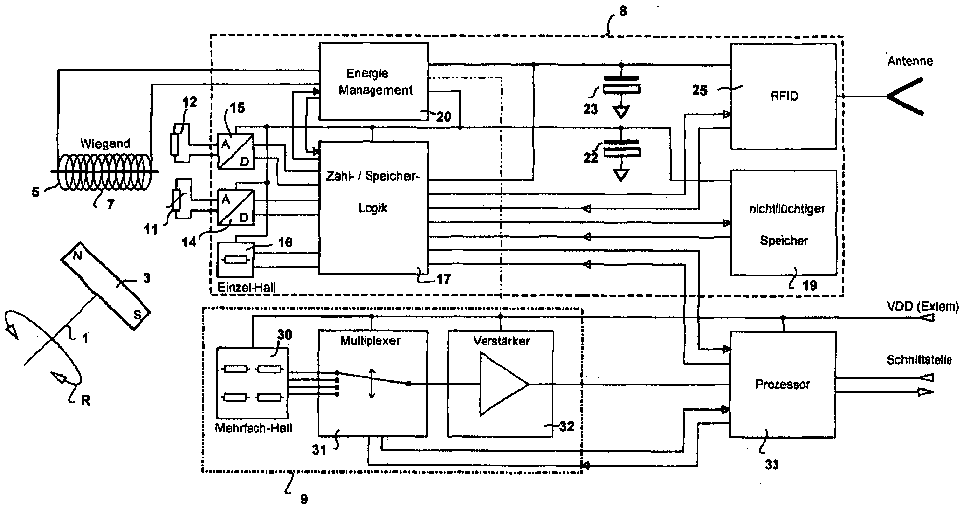

Die Erfindung wird im Folgenden anhand eines Ausführungsbeispiels unter Bezugnahme auf die Zeichnung beschrieben; in dieser zeigt die einzige Figur eine schematische Blockdarstellung der wesentlichsten, zur Durchführung des erfindungsgemäßen Verfahrens dienenden Bestandteile eines Durchflussmengenmessers auf der Basis eines autarken Drehgebers.

Um aus der Strömungsenergie eines Fluids die für die Durchführung der erforderlichen Mess- und Speichervorgänge benötigte elektrische Energie gewinnen zu können, ist ein in der Figur durch einen Permanentmagneten repräsentiertes Erregermagnetsystem 1 vorgesehen, das bei dem gezeigten Ausführungsbeispiel auf einem Rotor montiert ist, von dem in der Figur nur die Rotationsachse 3 angedeutet ist. Der Rotor wird, wie durch den Pfeil R angedeutet, mittels einer geeigneten, in der Figur nicht dargestellten mechanischen Vorrichtung durch den zu erfassenden Fluidstrom derart in Drehung versetzt, dass eine exakte Korrelation zwischen dem durch den Durchflussmengenmesser bzw. dessen Messkammer(n) strömenden Fluid-Volumen und dem vom Rotor durchlaufenen Drehwinkel besteht. Im Feld des Erregermagnetsystems 1 befindet sich eine Wiegand-Anordnung, die einen Wiegand- oder Impulsdraht 5 und eine auf diesen gewickelte Spule 7, in der immer dann ein Spannungsimpuls induziert wird, wenn das Erregermagnetsystem 1 bestimmte Winkelstellungen durchläuft. Besteht das Erregermagnetsystem 1 nur aus einem einzigen Permanentmagneten, so erhält man je voller Umdrehung des Rotors zwei solche Spannungsimpulse, doch ist es möglich, durch die Verwendung mehrerer Magnetpolpaare je Volldrehung beispielsweise auch sechs oder zehn solcher Spannungsimpulse zu erzeugen.

Für das hier beschriebene Beispiel wird davon ausgegangen, dass einer der je Volldrehung erzeugten Spannungsimpulse als Mess-Spannungsimpuls dient, d.h. dass immer dann, wenn der Rotor ein Winkelsegment $\Delta\varphi_M$ von 360° durchlaufen hat, das einem durch den Durchflussmengenmesser geströmten Einheitsvolumen $V_E$ des Fluids entspricht, die im folgenden beschriebenen Mess- und Speichervorgänge durchgeführt werden. Der Zeitpunkt des Auftretens eines solchen Mess-Spannungsimpulses wird im vorliegenden Zusammenhang als Messzeitpunkt bezeichnet.

Die in der Figur gezeigten Schaltungseinheiten lassen sich in zwei einander teilweise überschneidende Gruppen 8 und 9 einteilen, von denen die erste durch ein mit gestrichelten Linien dargestelltes Rechteck und die zweite durch ein mit strichpunktierten Linien gezeichnetes Rechteck umschlossen ist.

Von den Schaltungseinheiten und Bauelementen der ersten Gruppe 8 arbeiten die dem Temperatursensor 11 bzw. dem Drucksensor 12 zugeordneten Analog/Digitalwandler 14 bzw. 15, das gegebenenfalls zur Drehrichtungserkennung des Rotors vorgesehene einzelne Hallelement 16, die Zähl- und Speicherlogik 17, der nichtflüchtige Speicher 19 und die Energie-Managementschaltung 20 jedes Mal beim Auftreten eines Mess-Spannungsimpulses, der einen ersten, in der Figur von einem Kondensator gebildeten Energiespeicher 22 lädt, der dafür sorgt, dass den eben genannten Einheiten die erforderliche elektrischen Arbeitsenergie ausreichend lange zur Verfügung steht, damit sie die aktuellen Messwerte für die Fluidtemperatur $T_M$ und den Fluiddruck $p_M$ ermitteln und digitalisieren und die aus diesen Messwerten in der Zähl- und Speicherlogik 17 gebildeten ganzzahligen Zählwerte $\beta U_{pM}$ und. $\alpha U_{TM}$ als fortlaufende Summe im nichtflüchtigen Speicher 19 ablegen können, in dem gegebenenfalls auch ein von der Zähl- und Speicherlogik 17 ermittelter Zählerstand r abgelegt wird, der angibt, der wievielte Mess-Spannungsimpuls in einem betrachteten Liefer-Zeitintervall aufgetreten ist.

Die Erzeugung der fortlaufenden Summe soll für den Fall, dass der Druck als konstant gleich $p_0$ betrachtet werden kann, durch ein Zahlenbeispiel verdeutlicht werden. Nimmt man an, dass aufgrund einer entsprechenden Auflösung des Analog/Digitalwandlers 14 der Temperaturmesswert $U_{TM}$ in Zehntelgrad anfällt und nach dem Durchlaufen einer einen Mess-Spannungsimpuls auslösenden Volldrehung des Rotors beispielsweise 293,5 Kelvin beträgt, so wird dieser Wert mit $\alpha$=10 multipliziert, sodass sich ein ganzzahliger Zählwert von 2935 ergibt, der zur Bildung der fortlaufenden Summe zu dem im nichtflüchtigen Speicher 19 enthaltenen Zahlenwert (beispielsweise 576365) addiert wird, sodass die neue, nunmehr im nichtflüchtigen Speicher 19 enthaltenen fortlaufende Summe 579300 beträgt. Hat sich dann beim Auftreten des nächsten Mess-Spannungsimpulses die Temperatur um zwei Zehntelgrad auf 293,7 Kelvin erhöht, so erhält man als letzten ganzzahligen Zählwert 2937 und als letzte fortlaufende Summe 582237.

Im Gegensatz zu einem herkömmlichen Durchflussmengenzähler, dessen Zählwerk bei jedem Durchlaufen des Messwinkelsegmentes $\Delta\varphi_M$ von beispielsweise 360° um "1" weiterzählt, erhöht sich erfindungsgemäß die im nichtflüchtigen Speicher 19 niedergelegte, fortlaufende Summe jeweils um einen sich in Abhängigkeit von der zum Messzeitpunkt herrschenden Fluidtemperatur ändernden, ganzzahligen Zählwert, sodass in dieser fortlaufenden Summe alle Informationen enthalten sind, die benötigt werden, um die an den Abnehmer gelieferte Fluidmasse zu berechnen. Entsprechendes gilt auch für sich ändernde Druckmesswerte, wenn der zum jeweiligen Mess-Zeitpunkt erfasste Fluiddruck-Wert UpM variieren kann.

Geht man davon aus, dass die von einem Mess-Spannungsimpuls gelieferte Energie gerade ausreichend ist, um die zu jedem Messzeitpunkt anfallenden, geschilderten Mess- und Speicheraufgaben abzuarbeiten, dann ist vorgesehen, die Energie von zwischen den Mess-Spannungsimpulsen erzeugten Spannungsimpulsen, die keine derartigen Mess- und Speichervorgänge auslösen, in einem zweiten, beispielsweise ebenfalls von einem Kondensator gebildeten Energiespeicher 23 zu kumulieren, der zu wählbaren Zeitpunkten einen Sender 25 mit Energie versorgt, der mit Radiofrequenz, Infrarotlicht, Ultraschall oder einer beliebigen anderen Sendeenergie arbeiten kann, um den letzten Wert der im nichtflüchtigen Speicher 19 abgelegten fortlaufenden Summe und gegebenenfalls des Zählerstandes r an einen entfernt angeordneten Empfänger z.B. drahtlos zu senden, bei dem dann mit Fremdenergieversorgung die Durchführung der für die Ermittelung der in einem jeden Mess-Zeitintervall an den Abnehmer gelieferten Fluid-Masse erforderlichen Berechnungen mit Hilfe eines Prozessors, eines μ-Controllers, eines Computers oder dergleichen durchgeführt werden.

Beinhalten aber Mess-Spannungsimpulse mehr Energie, als für die jeweils anfallenden Mess- und Speicheraufgaben benötigt wird, so kann diese überschüssige Energie auch im weiteren Energiespeicher 23 kumuliert und in der oben geschilderten Weise verwendet werden.

Alle zur ersten Gruppe 8 gehörenden Schaltungsteile arbeiten völlig autark und benötigen weder eine Batterie noch eine andere Fremdenergieversorgung. Vorzugsweise sind sie in einem IC zusammengefasst, der auch als Hybridschaltung ausgebildet sein kann. Insbesondere der erste Energiespeicher 22 kann in diesem IC mit integriert sein. Im Allgemeinen ist der Temperatursensor ein gesondertes Bauelement.

Demgegenüber ist für die zur zweiten Gruppe 9 gehörenden Schaltungseinheiten bzw. Bauelemente, nämlich eine mehrere Hallelemente umfassende Hallsondenanordnung 30, einen Multiplexer 31 und einen Verstärker 32 eine Versorgung mit elektrischer Energie allein aus dem ersten Energiespeicher 22 nicht ausreichend. Sie benötigen daher eine zusätzliche Energiequelle, wie dies noch genauer erläutert wird.

Der in der Figur dargestellte Prozessor 33 kann entweder Bestandteil der unmittelbar beim Durchflussmengenmesser angeordneten Schaltungsanordnung sein; er ist dann entweder der Gruppe 9 zuzurechnen, oder er wird von dem weiteren Energiespeicher 23 mit elektrischer Energie versorgt, damit er aus dem jeweils letzten Wert der im nichtflüchtigen Speicher 19 abgelegten fortlaufenden Summe die entsprechenden Werte der gelieferten Fluidmasse errechnet und diese an den Sender 25 weitergibt, der sie dann z.B. drahtlos an einen entfernt angeordneten Empfänger sendet. Kann ein Empfänger die Daten von mehreren Sendern erhalten (Netzwerk-Anordnung) so übermittelt jeder der Sender zusammen mit den für die Berechnung des Liefervolumens $V_{Verbrauch}$ erforderlichen Daten eine ihn identifizierende Absender-Adresse.

Gemäß einer weiteren Alternative kann der Prozessor 33 mit den bereits erwähnten, bei einem entfernt liegenden Empfänger angeordneten Prozessor identisch sein, für den ohnehin eine Fremdenergieversorgung vorgesehen ist. Zu den erforderlichen Daten, die dann übertragen werden, gehören dann auch die Konstanten $K_1$ bis $K_3$ mit den enthaltenen Kalibrierdaten.

Die Hallsondenanordnung 30 befindet sich ebenso wie der Wiegand- oder Impulsdraht 5 und die auf ihn gewickelte Spule 7 im Feldbereich des Erregermagnetsystems 1 und dient dazu, die durch die Magnetpolpaare des Erregermagnetsystems 1 vorgegebenen Winkelsegmente fein aufzulösen, wie dies aus dem bereits erwähnten Stand der Technik bekannt ist (Multiturn). Der Multiplexer 31 dient zur einkanaligen Verarbeitung der Ausgangssignale der einzelnen Hallelemente der Hallsondenanordnung 30, die in dem nachfolgenden Verstärker 32 verstärkt und dann dem Prozessor 33 zugeführt werden, der aus ihnen in an sich bekannter Weise Feinwinkelwerte ermittelt, welche die jeweilige Rotorstellung genauer beschreiben.

Zweck dieser Feinauflösung ist einerseits eine erleichterte Eichung des erfindungsgemäßen Durchflussmengenmessers, die vor der ersten Inbetriebnahme werksseitig vorgenommen wird, wobei die Fremdspannung $V_{DD}$ ohne weiteres zur Verfügung steht.

Weiterhin kann die Feinauflösung zum Aufspüren von Lecks verwendet werden, durch die auf der Abnehmerseite des Durchflussmengenmessers nur sehr geringe Fluidmengen austreten. Zu diesem Zweck versorgt eine Wartungsperson die Schaltungsanordnung des Durchflussmengenmessers für einen Zeitraum, der beispielsweise in der Größenordnung von einigen Minuten liegen kann, mit externer Energie und beobachtet mit Hilfe der Feinauflösungsanordnung, ob sich die Winkelstellung des Rotors geringfügig ändert, was auf das Vorhandensein eines Lecks schließen lässt, oder nicht. Die "externe Energie" kann auf verschiedenste Arten zur Verfügung gestellt werden, beispielsweise durch Verwendung einer Batterie oder einer mit Umgebungslicht betriebenen Solarzelle usw.

An Stelle der erwähnten Hallelemente bzw. Hallsonden können auch andere magneto-sensitive Bauelemente, GMR- Sensoren (GMR = giant magneto resistance) verwendet werden.

Aus Platz- und Kostengründen ist generell die Realisierung der erfindungsgemäßen Vorrichtung mit einem einzigen Wiegand-Modul, bestehend aus einem Wiegand- oder Impulsdraht mit auf ihn aufgewickelter Spule bevorzugt. Es sind aber auch Lösungen mit zwei oder mehr Wiegand-Modulen an Stelle eines durch ein zusätzliches magnetosensitives Element ergänzten Wiegand-Moduls denkbar.

## Patentansprüche

1. Verfahren zur Bestimmung der Masse eines durch einen Durchflussmengenmesser strömenden Fluids, dessen absolute Temperatur $T_M$ in einem vorgesehenen Temperaturbereich schwanken kann, bei dem ein mindestens einen Erregermagneten umfassendes Erregermagnetsystems (1) durch das strömende Fluid derart angetrieben wird, dass eine exakte Korrelation zwischen dem durchströmenden Fluid-Volumen und der vom Erregermagnetsystem (1) durchlaufenen Bewegungsstrecke besteht, und ein Mess-Spannungsimpuls immer dann erzeugt wird, wenn das Erregermagnetsystems (1) eine vorgebbare, einem Einheitsvolumen $V_E$ des Fluids entsprechende Bewegungsstrecke durchlaufen hat, **dadurch gekennzeichnet, dass**

   - der Mess-Spannungsimpuls mit Hilfe mindestens eines im Feld des Erregermagnetsystems (1) angeordneten Wiegand- bzw. Impulsdrahtes (5) und einer auf diesen aufgewickelten Spule (7) erzeugt wird,
   - dass ein erster Energiespeicher (22) als autarke Energiequelle in einer internen Energiespeichereinheit jeweils bei dem einen Messzeitpunkt definierenden Auftreten eines Mess-Spannungsimpulses mit in diesem Spannungsimpuls enthaltener elektrischer Energie geladen wird, und
   - dass zu jedem Messzeitpunkt im ersten Energiespeicher (22) enthaltene Energie als Betriebsenergie für die folgenden Vorgänge verwendet wird:

      - Messen der momentanen absoluten Temperatur $T_M$ bzw. einer von dieser abgeleiteten Größe $U_{TM}$ des den Durchflussmengenmesser durchströmenden Fluids mit einer Temperaturmesseinrichtung,
      - Multiplizieren der momentanen absoluten Temperatur $T_M$ mit einer Konstanten $\alpha$, die entsprechend der Auflösung der momentanen absoluten Temperatur $T_M$ derart gewählt ist, dass ein ganzzahliger Temperaturwert $\alpha T_M$ gebildet wird, und Erzeugen eines den ganzzahligen Temperaturwert $\alpha T_M$ umfassenden, ganzzahligen Zählwertes $\{K_2 - \alpha T_M\}$, bei dem $K_2 = (1+\rho)T_0\alpha/\rho^2$ ist, $\rho$ eine geeignet gewählte Korrekturkonstante $\leq 1$ bedeutet und $T_0$ eine festgelegte Konstante ist, bzw. Multiplizieren der von der momentanen absoluten Temperatur $T_M$ abgeleiteten Größe $U_{TM}$ mit einer Konstanten $\alpha$, die entsprechend der Auflösung der momentanen absoluten Temperatur $T_M$ derart gewählt ist, dass ein ganzzahliger von der Temperatur abgeleiteter Wert $\alpha U_{TM}$ gebildet wird,
      - Hinzuaddieren für jede r Messwerterfassung des ganzzahligen Zählwertes $\{K_2 - \alpha T_M\}$ bzw. $\alpha U_{TM}$ zu einer in einem nichtflüchtigen Speicher (19) enthaltenen Summe aus den vorausgehend ermittelten Zählwerten zur Bildung einer im nichtflpchtigen Speicher, (19) abgelegten fortlaufenden Summe

$$\sum^r \left(K_2 - \alpha T_M\right) \text{ bzw. } \sum^r \alpha U_{TM}$$

      - und zu wählbaren Übertragungszeitpunkten erfolgendes Weiterleiten der im nichtflüchtigen Speicher (19) abgelegten fortlaufenden Summe $\sum^r \left(K_2 - \alpha T_M\right)$ bzw. $\sum^r \alpha U_{TM}$ an einen mit externer Energie versorgbaren Prozessor (33), zur Berechnung des temperaturkorrigierten Liefervolumens $V_{Verbrauch}$ des Fluids, das der durch den Durchflussmengenmesser geströmten Masse des Fluids entspricht.

**2.** Verfahren nach Anspruch 1, **dadurch gekennzeichnet, dass** unter Verwendung von im ersten Energiespeicher (22) enthaltener Energie zu jedem Messzeitpunkt zusätzlich folgende Schritte durchgeführt werden:

- Messung des im Einheitsvolumen herrschenden Drucks ($p_M$) mit einer Druckmesseinrichtung (12),
- Erzeugen eines Druckwertes $\beta U_{pM}$ als ganzzahliges Vielfaches der kleinsten aufzulösenden Druck-Maßeinheit und
- Erzeugen eines ganzzahligen Zählwertes $\alpha\beta U_{TM}U_{pM}$ als Produkt aus Temperaturwert $\alpha U_{TM}$ und Druckwert $\beta U_{pM}$,
- Hinzuaddieren des ganzzahligen Zählwertes $\alpha\beta U_{TM}U_{pM}$ zu einer in einem nichtflüchtigen Speicher (19) enthaltenen Summe aus den vorausgehend ermittelten Zählwerten zur Bildung einer im nichtflüchtigen Speicher (19) abgelegten fortlaufenden Summe $\sum^{r} \alpha\beta U_{TM}U_{pM}$ und

- und zu wählbaren Übertragungszeitpunkten erfolgendes Weiterleiten der im nichtflüchtigen Speicher abgelegten fortlaufenden Summe $\sum^{r} \alpha\beta U_{TM}U_{pM}$ an einen mit externer Energie versorgbaren Prozessor (33), der aus ihr unter Verwendung der bekannten Konstanten ($\alpha$, $\beta$, $p_0$, $T_0$, $V_E$) das temperatur- und druckkorrigierte Liefervolumen $V_{Verbrauch}$ des Fluids berechnet, das der durch den Durchflussmengenmesser geströmten Masse entspricht.

**3.** Verfahren nach Anspruch 1, **dadurch gekennzeichnet, dass** die momentane Temperatur mit Hilfe eines Temperatursensors (11) gemessen wird, dessen Ausgangsspannung zur absoluten Temperatur $T_M$ direkt proportional ist.

**4.** Verfahren nach Anspruch 1 oder 2, **dadurch gekennzeichnet, dass** die von der momentanen absoluten Temperatur abgeleitete Größe die zu dieser Temperatur umgekehrt proportionale Ausgangsspannung $U_{TM}$ eines Temperatursensors (11) ist.

**5.** Verfahren nach Anspruch 1 oder 3, **dadurch gekennzeichnet, dass** der ganzzahlige Zählwert nur aus dem Temperaturwert $\alpha T_M$ bzw. dem Wert der von der Temperatur abgeleiteten Größe $\alpha\Delta U_{TM}$ besteht und dass die Mess-Spannungsimpulse zusätzlich gezählt und der zum Übertragungszeitpunkt erreichte Zählerstand r auch an den mit externer Energie versorgbaren Prozessor (33) übertragen und von diesem zur Berechnung des temperaturkorrigierten Liefervolumens verwendet wird.

**6.** Verfahren nach einem der vorhergehenden Ansprüche, **dadurch gekennzeichnet, dass** die Drehrichtung des Rotors mit Hilfe des Ausgangssignals eines vom ersten Energiespeicher (22) der internen Energiespeichereinheit mit elektrischer Energie versorgten Hallelementes (16) erfasst wird.

**7.** Verfahren nach einem der vorhergehenden Ansprüche, **dadurch gekennzeichnet, dass** das sich mit der Temperatur $T_m$ ändernde, analoge Ausgangssignal des Temperatursensors (11) mit Hilfe eines zur Temperaturmesseinheit gehörenden Analog/Digitalwandlers (14) in den einer Zähl- und Speicherlogik (17) zuführbaren ganzzahligen Wert mit der entsprechenden Auflösung a umgeformt wird.

**8.** Verfahren nach einem der Ansprüche 2 bis 7, **dadurch gekennzeichnet, dass** das sich mit dem Druck $p_M$ ändernde, analoge Ausgangssignal des Drucksensors (12) mit Hilfe eines zur Druckmesseinrichtung gehörenden Analog/Digitalwandlers (15) in den der Zähl- und Speicherlogik (17) zuführbaren ganzzahligen Wert mit der entsprechenden Auflösung $\beta$ umgeformt wird.

**9.** Verfahren nach einem der vorhergehenden Ansprüche, **dadurch gekennzeichnet, dass** eine Feinauflösung des Messwinkels mit Hilfe einer Mess- und Verarbeitungsanordnung (30, 31, 32, 33) durchgeführt wird, zu deren Versorgung mit elektrischer Energie an den Durchflussmengenmesser eine externe Spannung $V_{DD}$ anlegbar ist.

**10.** Verfahren nach Anspruch 9, **dadurch gekennzeichnet, dass** die Feinauflösung des Messwinkels zur Kalibrierung des Durchflussmengenmessers und/oder zur Erkennung von Lecks in dem hinter dem Durchflussmengenmesser liegenden Strömungsweg des Fluids verwendet wird.

**11.** Verfahren nach einem der vorhergehenden Ansprüche, **dadurch gekennzeichnet, dass** das Erregermagnetsystem wenigstens zwei nach außen hin durch einen ferromagnetischen Rückschlusskörper abgeschirmte Erregermagnete umfasst, sodass in der auf den Wiegand- bzw. Impulsdraht (5) aufgewickelten Spule (7) zwischen den Mess-Spannungsimpulsen weitere Spannungsimpulse induziert werden, deren Energie in einem weiteren Energiespeicher (23) der Energiespeichereinheit kumuliert wird, um den letzten Wert der im nichtflüchtigen Speicher (19) abgelegten fortlaufenden Summe an einen entfernt angeordneten Empfänger zu senden.

**12.** Verfahren nach einem der vorhergehenden Ansprüche, **dadurch gekennzeichnet, dass** ein zusätzliches magnetosensitives Element im Feld des Erregermagnetsystems angeordnet ist, dessen Ausgangssignal zur Drehrichtungserkennung dient.

**13.** Vorrichtung zur Durchführung des Verfahrens nach einem der vorhergehenden Ansprüche.

**Claims**

**1.** Method for determining the mass of a fluid flowing through a flow rate measurement device, the absolute temperature $T_M$ of which fluid may fluctuate in a designated temperature range, for which fluid an exciter magnet system (1) having at least one exciter magnet is driven by the flowing fluid such that a precise correlation between the through-flowing fluid volume and the movement distance passed through by exciter magnet system (1) exists, and a measurement voltage impulse is generated always at the time when the exciter magnet system (1) has passed through a preselectable movement distance that corresponds to a standard volume $V_E$ of the fluid,
**characterized in that**

- the measurement voltage impulse is generated by means of at least one Wiegand and/or impulse wire (5) that is arranged in the field of the exciter magnet system (1), and a coil (7) wound up on the wire,
- that a first energy storage (22) as an autarkical energy source in an internal energy storage unit is charged respectively at the occurrence of a measurement voltage impulse, which occurrence defines a time point of measurement, with electric energy contained in this voltage impulse, and
- that at each time point of measurement, energy that is contained in the first energy storage (22) is used as operation energy for the following processes:

o measuring the current absolute temperature $T_M$ and/or a quantity $U_{TM}$ of the fluid that passes through the flow rate measurement device, which quantity is derived from the absolute temperature, using a temperature measurement device,

∘ multiplying the current absolute temperature $T_M$ by a constant $\alpha$, which is selected according to the resolution of the current absolute temperature $T_M$ such that a whole-number temperature value $\alpha T_M$ is formed, and generating a whole-number count value $\{K_2 - \alpha T_M\}$, for which is $K_2 = (1+\rho)T_0\alpha/\rho^2$, $\rho$ means a suitably selected correction constant $\leq 1$, and $T_0$ is a fixed contant and/or multiplying the quantity $U_{TM}$ derived from the absolute temperature $T_M$ by a constant $\alpha$, which is selected according to the resolution of the current absolute temperature $T_M$ such that a whole-number value $\alpha U_{TM}$ derived from the temperature is formed,

∘ for each r acquisition, adding the whole-number count value $\{K_2 - \alpha T_M\}$ and/or $\alpha U_{TM}$ to a sum of the precedingly determined count values, which sum is contained in a non-volatile memory (19), for forming a consecutive sum $\sum^r (K_2 - \alpha T_M)$ and/or $\sum^r \alpha U_{TM}$

o and forwarding of the consecutive sum $\sum^r (K_2 - \alpha T_M)$ and/or $\sum^r \alpha U_{TM}$, at selectable time points of transmission, to a processor (33) that can be supplied with external energy, for calculating the temperature-corrected delivery volume $V_{consumption}$ of the fluid, which delivery volume corresponds to the mass of the fluid that has passed through the flow rate measurement device.

**2.** Method according to claim 1, **characterized in that**, using energy contained in the first energy storage (22), at each time point of measurement, in addition the following steps are performed:

- measuring the pressure ($p_M$) that prevails in the standard volume using a pressure measurement device (12),
- generating a pressure value $\beta U_{pM}$ as a whole-number multiple of the smallest resolvable pressure measurement unit and
- generating a whole-number count value $\alpha\beta\, U_{TM}U_{pM}$ as the product of the temperature value $\alpha U_{TM}$ and the pressure value $\beta U_{pM}$,
- adding the whole-number count value $\alpha\beta\, U_{TM}U_{pM}$ to a sum of the precedingly determined count values, which sum is contained in the non-volatile memory (19), for forming a consecutive sum $\sum^r \alpha\beta U_{TM}U_{pM}$ that is stored in the non-volatile memory (19) and
- at selectable time points of transmission, forwarding the consecutive sum $\Sigma^r \, \alpha\beta U_{TM}U_{pM}$ that is stored in the non-volatile memory to a processor (33) that can be supplied with external energy, which processor calculates, using the known constants ($\alpha$, $\beta$, $p_0$, $T_0$, $V_E$), the temperature- and pressure-corrected delivery volume $V_{consumption}$ of the fluid, which delivery volume corresponds to the mass of the fluid that has passed through the flow rate measurement device.

3. Method according to claim 1, **characterized in that** the current temperature is measured by means of a temperature sensor (11), the output voltage of which is directly proportional to the absolute temperature $T_M$.

4. Method according to claim 1 or 2, **characterized in that** the quantity that is derived from the current absolute temperature is the output voltage $U_{TM}$ of a temperature sensor (11), which output voltage is inversely proportional to this temperature.

5. Method according to claim 1 or 3, **characterized in that** the whole-number count value consists only of the temperature value $\alpha T_M$ and/or the value of the quantity $\alpha\Delta U_{TM}$ derived from the temperature, and **in that** the measurement voltage impulses are counted in addition, and the counter reading r is also transmitted to the processor (33) that can be supplied with external energy and is used by the latter for calculating the temperature-corrected delivery volume.

6. Method according to any one of the preceding claims, **characterized in that** the rotation direction of the rotor is measured by means of the output signal of a Hall element (16) that is supplied with electric energy from the first energy storage (22) of the internal energy storage unit.

7. Method according to any one of the preceding claims, **characterized in that** the analogue output signal of the temperature sensor (11), which signal changes with the temperature $T_m$, is transformed into the whole-number value, which can be supplied to the count and storage logic (17), with the according resolution $\alpha$ by means of an analogue-to-digital converter (14) that belongs to the temperature measurement unit

8. Method according to any one of the claims 2 to 7, **characterized in that** the analogue output signal of the pressure sensor (12), which signal changes with the pressure $p_m$, is transformed into the whole-number value, which can be supplied to the count and storage logic (17), with the according resolution $\beta$ by means of an analogue-to-digital converter (15) that belongs to the pressure measurement unit.

9. Method according to any one of the preceding claims, **characterized in that** a fine resolution of the measurement angle is performed by means of a measurement and processing arrangement (30, 31, 32, 33), for the supply of which with electric energy an external voltage $V_{DD}$ can be applied to the flow rate measurement device.

10. Method according to claim 9, **characterized in that** the fine resolution of the measurement angle is used for a calibration of the flow rate measurement device and/or for a recognition of leakages in the flow path present behind the flow rate measurement device.

11. Method according to any one of the preceding claims, **characterized in that** the exciter magnet system has at least two exciter magnets that are shielded to the outside by a ferromagnetic return body such that further voltage impulses are induced between the measurement voltage impulses in the coil (7) that is wound up on the Wiegand and/or impulse wire (5), wherein the energy of the further voltage impulses is accumulated in a further energy storage (23) of the energy storage unit in order to send the last value of the consecutive sum that is stored in the non-volatile memory (19) to a receiver arranged remotely.

12. Method according to any one of the preceding claims, **characterized in that** an additional magneto-sensitive element is arranged in the field of the exciter magnet system, wherein the output signal of the magneto-sensitive element serves for recognition of the rotation direction.

13. Device for performing the method according to any one of the preceding claims.

**Revendications**

1. Procédé de détermination de la masse d'un fluide s'écoulant à travers un débitmètre, dont la température absolue $T_M$ peut osciller dans une plage de température prévue, pour lequel un système à aimant d'excitation (1) comprenant au moins un aimant d'excitation est entraîné par le fluide s'écoulant de telle manière qu'une corrélation exacte entre le volume de fluide s'écoulant et le trajet de déplacement parcouru par le système à aimant d'excitation (1) existe, et une impulsion de tension de mesure est toujours générée lorsque le système à aimant d'excitation (1) a parcouru un trajet de déplacement pouvant être prédéfini, correspondant à un volume unitaire $V_E$ du fluide, **caractérisé en ce que**

   - l'impulsion de tension de mesure est générée à l'aide d'au moins un fil à effet Wiegand ou d'impulsion (5) agencé dans le champ du système à aimant d'excitation (1) et d'une bobine (7) enroulée sur celui-ci,
   - qu'un premier accumulateur d'énergie (22) est chargé, en tant que source d'énergie autonome, dans une unité d'accumulateur d'énergie interne, respectivement lors de l'apparition d'une impulsion de tension de mesure, définissant un moment de mesure, en énergie électrique contenue dans cette impulsion de tension, et
   - que de l'énergie contenue à chaque moment de mesure dans le premier accumulateur d'énergie (22) est utilisée en tant qu'énergie fonctionnelle pour les processus suivants :

      - la mesure de la température absolue momentanée $T_M$ ou d'une grandeur $U_{TM}$ dérivée de celle-ci du fluide traversant le débitmètre avec un dispositif de mesure de température,

         - la multiplication de la température absolue momentanée $T_M$ par une constante $\alpha$ qui est choisie selon la résolution de la température absolue momentanée $T_M$ de telle manière qu'une valeur de température entière $\alpha T_M$ soit formée, et la génération d'une valeur de comptage entière $\{K_2 - \alpha T_M\}$ comprenant la valeur de température entière $\alpha T_M$, pour laquelle $K_2 = (1+\rho)T_0\alpha/\rho^2$, $\rho$ signifie une constante de correction $\leq 1$ choisie de manière appropriée et $T_0$ est une constante définie, ou la multiplication de la grandeur $U_{TM}$ dérivée de la température absolue momentanée $T_M$ par une constante $\alpha$ qui est choisie selon la résolution de la température absolue momentanée $T_M$ de telle manière qu'une valeur entière $\alpha U_{TM}$ dérivée de la température soit formée,
         - l'ajout pour chaque détection de valeur de mesure r de la valeur de comptage entière $\{K_2 - \alpha T_M\}$ ou $\alpha U_{TM}$ à une somme contenue dans une mémoire non volatile (19) des valeurs de comptage entières déterminées précédemment pour la formation d'une somme continue enregistrée dans la mémoire non volatile (19) $\Sigma^r(K_2 - \alpha T_M)$ ou $\Sigma^r \alpha U_{TM}$
         - et la transmission, s'effectuant aux moments de transmission pouvant être choisis, de la somme continue enregistrée dans la mémoire non volatile (19) $\Sigma^r (K_2 - \alpha T_M)$ ou $\Sigma^r \alpha U_{TM}$ à un processeur (33) pouvant être alimenté en énergie externe, pour le calcul du volume de livraison $V_{consoirmation}$ à température corrigée du fluide, qui correspond à la masse du fluide s'étant écoulée à travers le débitmètre.

2. Procédé selon la revendication 1, **caractérisé en ce qu'**en utilisant de l'énergie contenue dans le premier accumulateur d'énergie (22) à chaque moment de mesure, les étapes suivantes sont en outre réalisées :

   - la mesure de la pression ($p_M$) régnant dans le volume unitaire avec un dispositif de mesure de pression (12),
   - la génération d'une valeur de pression $\beta U_{pM}$ en tant que multiple entier de l'unité de masse de pression la plus petite à résoudre et
   - la génération d'une valeur de comptage entière $\alpha\beta U_{TM}U_{pM}$ en tant que produit de la valeur de température $\alpha U_{TM}$ et de la valeur de pression $\beta U_{pM}$,
   - l'ajout de la valeur de comptage entière $\alpha\beta U_{TM}U_{pM}$ à une somme contenue dans une mémoire non volatile (19) des valeurs de comptage déterminées précédemment pour la formation d'une somme continue enregistrée dans la mémoire non volatile (19) $\Sigma^r \alpha\beta U_{TM}U_{pM}$ et
   - et la transmission, s'effectuant aux moments de transmission pouvant être choisis, de la somme continue enregistrée dans la mémoire non volatile $\Sigma^r \alpha\beta U_{TM}U_{pM}$ à un processeur (33) pouvant être alimenté en énergie externe qui calcule à partir de celle-ci en utilisant les constantes connues ($\alpha$, $\beta$, $p_0$, $T_0$, $V_E$) le volume de livraison $V_{consoirmation}$ à température et pression corrigées du fluide qui correspond à la masse s'étant écoulée à travers le débitmètre.

3. Procédé selon la revendication 1, **caractérisé en ce que** la température momentanée est mesurée à l'aide d'un capteur de température (11) dont la tension de sortie est directement proportionnelle à la température absolue $T_M$.

**4.** Procédé selon la revendication 1 ou 2, **caractérisé en ce que** la grandeur dérivée de la température absolue momentanée est la tension de sortie $U_{TM}$ d'un capteur de température (11) inversement proportionnelle à cette température.

**5.** Procédé selon la revendication 1 ou 3, **caractérisé en ce que** la valeur de comptage entière se compose seulement de la valeur de température $\alpha T_M$ ou de la valeur de la grandeur $\alpha \Delta U_{TM}$ dérivée de la température, et que les impulsions de tension de mesure sont en outre comptées et le relevé de compteur r atteint au moment de la transmission est aussi transmis au processeur (33) pouvant être alimenté en énergie externe et est utilisé par celui-ci pour le calcul du volume de livraison à température corrigée.

**6.** Procédé selon l'une des revendications précédentes, **caractérisé en ce que** le sens de rotation du rotor est détecté à l'aide du signal de sortie d'un élément à effet Hall (16) alimenté en énergie électrique par le premier accumulateur d'énergie (22) de l'unité d'accumulateur d'énergie interne.

**7.** Procédé selon l'une des revendications précédentes, **caractérisé en ce que** le signal de sortie analogique, se modifiant avec la température $T_m$, du capteur de température (11) est formé à l'aide d'un convertisseur analogique/numérique (14) appartenant à l'unité de mesure de température en la valeur entière pouvant être amenée à une logique de comptage et d'accumulation (17) avec la résolution $\alpha$ correspondante.

**8.** Procédé selon l'une des revendications 2 à 7, **caractérisé en ce que** le signal de sortie analogique, se modifiant avec la pression $p_M$, du capteur de pression (12) est formé à l'aide d'un convertisseur analogique/numérique (15) appartenant au dispositif de mesure de pression en la valeur entière pouvant être amenée à la logique de comptage et d'accumulation (17) avec la résolution $\beta$ correspondante.

**9.** Procédé selon l'une des revendications précédentes, **caractérisé en ce qu'**une résolution fine de l'angle de mesure est réalisée à l'aide d'un agencement de mesure et de traitement (30, 31, 32, 33), pour l'alimentation en énergie électrique duquel une tension externe $V_{DD}$ peut être appliquée au débitmètre.

**10.** Procédé selon la revendication 9, **caractérisé en ce que** la résolution fine de l'angle de mesure est utilisée pour l'étalonnage du débitmètre et/ou pour la reconnaissance de fuites dans la voie d'écoulement du fluide se trouvant derrière le débitmètre.

**11.** Procédé selon l'une des revendications précédentes, **caractérisé en ce que** le système à aimant d'excitation comporte au moins deux aimants d'excitation protégés vers l'extérieur par un corps de reflux ferromagnétique de sorte que dans la bobine (7) enroulée sur le fil à effet Wiegand ou d'impulsion (5) entre les impulsions de tension de mesure d'autres impulsions de tension soient induites, dont l'énergie est cumulée dans un autre accumulateur d'énergie (23) de l'unité d'accumulateur d'énergie afin d'envoyer la dernière valeur de la somme continue enregistrée dans la mémoire non volatile (19) à un récepteur agencé à distance.

**12.** Procédé selon l'une des revendications précédentes, **caractérisé en ce qu'**un élément magnéto-sensible supplémentaire est agencé dans le champ du système à aimant d'excitation, dont le signal de sortie sert à la reconnaissance du sens de rotation.

**13.** Dispositif de réalisation du procédé selon l'une des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0309644 A2
- DE 102007039050 A1
- DE 102008051479 A1